# EUROPÄISCHE PATENTANMELDUNG

(11) **EP 1 004 911 A1**
(43) Veröffentlichungstag der Anmeldung: **31.05.2000**
(21) Anmeldenummer: 98122207.8
(22) Anmeldetag: 23.11.1998
(51) Int. Cl.: G02B 6/38

(54) **Buchsenteil für eine optische Steckverbindung**

(71) Anmelder: Diamond SA, 6616 Losone (CH)
(72) Erfinder: De Marchi, Silverio, 6612 Ascona (CH); Volpi, Franco, 6652 Tegna (CH)
(74) Vertreter: Wenger, René

(57) **Zusammenfassung**

Das Buchsenteil (1) hat ein Buchsengehäuse (2), das mit wenigstens einer Buchsenöffnung (3, 3') zum Einführen eines Steckerteils (4) versehen ist. Im Buchsengehäuse ist ein Zentrierteil (5) zur Aufnahme eines dem Steckerteil zugeordneten Steckerstifts (6) gelagert. Das Zentrierteil ist dabei als Zentrierhülse (7) mit auf der Aussenseite angeordneten Rastmitteln (8) ausgebildet. Es kann von der Buchsenöffnung (3, 3') her in das Buchsengehäuse eingeschoben werden, das auf seiner Innenseite (9) korrespondierende Rastmittel (10) zur Aufnahme des Zentrierteils aufweist. Das seitliche Einschieben des Zentrierteils erleichtert die Montage und vereinfacht die Fertigung der Bauteile.

## Beschreibung

Die Erfindung betrifft ein Buchsenteil für eine optische Steckverbindung gemäss dem Oberbegriff von Anspruch 1. Derartige Buchsenteile sind entweder als Mittelteile ausgebildet, in welchem die Steckerstifte von zwei eingesteckten Steckern aufeinander zentriert werden, oder es handelt sich um ein sogenanntes Receptacle, das die Schnittstelle zwischen einem optischen Sender- oder Empfängermodul und einem optischen Stecker bildet.

Das im Buchsengehäuse angeordnete Zentrierteil sorgt für eine präzise Ausrichtung der Steckerstifte und stellt daher hohe Anforderungen bezüglich Massgenauigkeit und Materialeigenschaften. Bei zahlreichen bekannten Buchsenteilen ist im Zentrierteil eine Innenhülse aus keramischem Material oder aus Hartmetall schwimmend gelagert. Aus den genannten Gründen ist es relativ schwierig, das Zentrierteil einstückig mit dem übrigen Buchsengehäuse auszubilden. Es muss vielmehr als separates Bauteil auf geeignete Weise im Buchsengehäuse gelagert werden.

Durch die EP-A-570 652 ist ein gattungsmässig vergleichbares Buchsenteil bekannt geworden, bei dem das Zentrierteil aus zwei Hälften besteht, welche durch eine Öffnung in einer Bodenwand lateral in das Buchsengehäuse eingeschoben werden. Die Öffnung wird durch eine nachträglich aufgeschobene Aussenhülse verschlossen.

Eine alternative Möglichkeit besteht darin, das ganze Buchsengehäuse zweiteilig auszubilden, um die Aufnahme und Lagerung einer Innenhülse zu ermöglichen, wie dies aus der EP-B-543 094 ersichtlich ist.

Die bekannten Buchsenteile sind für bestimmte Applikationen zu aufwendig bezüglich Herstellung und Montage. Es ist daher eine Aufgabe der Erfindung, ein Buchsenteil der eingangs genannten Art so zu verbessern, dass ein separat hergestelltes Zentrierteil auf einfache Weise im Buchsengehäuse montiert werden kann, ohne dass die Funktion der Steckverbindung dabei beeinträchtigt wird. Dabei soll auch das Buchsengehäuse herstellungstechnisch vereinfacht werden und keine seitlichen Montageöffnungen aufweisen. Das Buchsenteil soll ausserdem je nach Einsatzzweck mit unterschiedlichen Zentrierteilen bestückt werden können. Diese Aufgabe wird erfindungsgemäss mit einem Buchsenteil gelöst, das die Merkmale im Anspruch 1 aufweist.

Die mit Rastmitteln auf der Aussenseite versehene Zentrierhülse kann auf besonders einfache Weise von der Buchsenöffnung her in das Buchsengehäuse eingeschoben werden. Dort sind korrespondierende Rastmittel vorgesehen, welche das Zentrierteil beim Erreichen der Endposition fixieren. Die Montage des Buchsenteils wird auf diese Weise erheblich beschleunigt. Bei richtiger Wahl und Anordnung der Rastmittel können die beim Einstecken und Ausstecken eines Steckerteils auftretenden Kräfte problemlos aufgenommen werden.

Besonders vorteilhaft ist die Zentrierhülse wenigstens teilweise von einer Haltewand umgeben, welche quer zur Längsachse der Zentrierhülse verläuft und an deren Randbereich die Rastmittel angeordnet sind. Die Haltewand ermöglicht eine Anordnung mehrerer Rastmittelgruppen im Abstand zueinander, womit die Stabilität im eingerasteten Zustand verbessert werden kann. So können beispielsweise auf drei im Abstand zueinander angeordneten und parallel zur Längsachse der Zentrierhülse verlaufenden Achsen bzw. Ebenen separate Rastmittel am Zentrierteil bzw. am Buchsenteil angeordnet sein. Dies ist besonders einfach möglich, wenn die Haltewand etwa rechtecktig ausgebildet ist und wenn die separaten Rastmittel an drei Aussenkanten der Haltewand angeordnet sind. Selbstverständlich wäre es aber auch denkbar, die Rastmittel unmittelbar am Aussenmantel der Zentrierhülse anzuordnen. In bestimmten Fällen könnte die Haltewand auch parallel zur Längsachse der Zentrierhülse verlaufen.

Die Rastmittel können als Sperrleisten ausgebildet sein, die hinter korrespondierende Sperrschultern am jeweils gegenüberliegenden Bauteil einrastbar sind. Aber auch andere Rastelemente wie z.B. Nocken oder dergleichen sind denkbar.

Die Sperrleisten und/oder die Sperrschultern an der Haltewand weisen vorteilhaft eine Wandstärke auf, welche geringer ist, als die Wandstärke der Haltewand selbst. Bei den sehr engen baulichen Verhältnissen innerhalb des Buchsengehäuses geht auf diese Weise kein Platz verloren für die Rastmittel.

Bei einem Buchsenteil mit wenigstens zwei Buchsenöffnungen, bei dem auf der gleichen optischen Achse von zwei Seiten her je ein Steckerteil einschiebbar ist, werden weitere Vorteile dadurch erreicht, dass das Zentrierteil von beiden Buchsenöffnungen her einschiebbar und im Buchsengehäuse einrastbar ist. Fehlerhafte Montagen sind auf diese Weise nicht möglich, weil das Zentrierteil in jedem Fall in der richtigen Endposition einrasten wird.

Die beidseitige Einrastbarkeit kann besonders einfach dadurch gewährleistet werden, dass die Rastmittel in Rastmittelpaare unterteilt sind, und dass jedes Rastmittelpaar zwei nebeneinanderliegende Rastelemente, insbesondere zwei Sperrleisten oder zwei Sperrschultern aufweist, die beim Einschieben des Zentrierteils alternativ entweder von der einen oder von der anderen Buchsenöffnung her wirksam sind und einrasten. Die beiden Rastelemente sind dabei auf zwei nebeneinanderliegenden, parallelen Ebenen versetzt zueinander angeordnet.

Das Zentrierteil kann aus zwei identischen Hälften zusammengesetzt sein, wobei in der Zentrierhülse eine Innenhülse, vorzugsweise aus Metall oder aus Keramik, gelagert ist. Die Trennebene zwischen den beiden Hälften verläuft dabei quer zur Längsrichtung der Zentrierhülse durch die Mitte der Haltewand. Die aus hartem Werkstoff bestehende Innenhülse ist in der Regel in Längsrichtung geschlitzt, um eine beschränkte Umfangselastizität zu erreichen.

In bestimmten Fällen ist der Einsatz einer separaten Innenhülse nicht erforderlich. Es genügt eine Zentrierhülse aus Kunststoffmaterial, wobei allerdings eine passgenaue Aufnahme der Steckerstifte und eine gewisse Umfangselastizität auf andere Weise gewährleistet sein muss. Durch die EP-A-718 651 ist bereits eine Zentrierhülse aus Kunststoffmaterial mit elastischen Eigenschaften in Umfangsrichtung bekannt geworden. Diese Hülse muss allerdings wie eine Innenhülse aus Keramik oder Metall schwimmend in einer Hülsenaufnahme gelagert werden.

Weitere Vorteile können nun erfindungsgemäss dadurch erreicht werden, dass das Zentrierteil einstückig aus einem Kunststoffmaterial und im Querschnitt im wesentlichen kreisringförmig ausgebildet ist und wenn die Zentrierhülse im Querschnitt in wenigstens drei relativ formsteife Zentriersektoren unterteilt ist, die sich über die Länge der Zentrierhülse erstreckende Führungsabschnitte bilden. Diese Führungsabschnitte nehmen einen eingesteckten Steckerstift formschlüssig auf. Zwischen den Zentriersektoren bzw. den Führungsabschnitten sind relativ elastische Zonen mit geringerer Wandstärke angeordnet, welche den eingesteckten Steckerstift nicht berühren. Die Toleranzpaarung zwischen dem Innendurchmesser der Führungsabschnitte und dem Aussendurchmesser eines Steckerstifts ist so gewählt, dass der Steckerstift ein geringes Übermass aufweist. Beim Einstecken in die Zentrierhülse können sich die Führungsabschnitte aufgrund der elastischen Zonen geringfügig nach aussen dehnen und nehmen so den Steckerstift passgenau auf. Da die Führungsabschnitte aber relativ formsteif ausgebildet sind, können sie Querkräfte gut aufnehmen, wobei eine hohe Zentrizität gewährleistet ist.

Zur Erleichterung des Einsteckvorgangs können sich die Führungsabschnitte an den beiden Enden der Zentrierhülse gegen aussen konisch erweitern.

Besonders vorteilhaft ist eine derartige Zentrierhülse in einem mittleren Bereich, an dem zwei eingesteckte Steckerstifte stirnseitig aufeinandertreffen, von einer quer zur Längsachse verlaufenden Haltewand umgeben. Diese Haltewand ermöglicht wie bereits eingangs erwähnt, das Anordnen von Rastelementen. Die Haltewand bewirkt aber auch, dass die Umfangselastizität der Zentrierhülse in diesem Bereich kleiner ist als im Bereich der Endabschnitte. Ein derartiges Zentrierteil könnte auch ganz unabhängig von der Art des Einbaus vorteilhaft sein.

Dort wo die beiden Steckerstifte somit aufeinandertreffen, wird die Zentrierhülse verhältnismässig steif, was die Übertragungsqualität verbessert.

Optimale Eigenschaften an der Zentrierhülse werden erreicht, wenn die Wandstärke im Bereich der relativ elastischen Zonen kleiner ist als die Hälfte der Wandstärke im Bereich der Führungsabschnitte. Ausserdem ist es vorteilhaft, wenn der Sektorwinkel bzw. die Bogenlänge der Zentriersektoren bzw. der Führungsabschnitte grösser ist als der Sektorwinkel bzw. die Bogenlänge der dazwischenliegenden relativ elastischen Zonen. Das Zentrierteil kann aus unterschiedlichen Kunststoffmaterialien hergestellt werden. Besonders gute Ergebnisse können jedoch mit einem Polyphenylsulfid (PPS) erreicht werden, das vorzugsweise einen Gehalt von ca. 30% Kohlenstoff und von ca. 15% Polytetrafluoräthylen (PTFE) aufweist. Das PTFE verbessert die Gleiteigenschaften und reduziert die Schubkräfte beim Einsteckvorgang. Auch das Buchsengehäuse besteht vorteilhaft aus einem geeigneten Kunststoffmaterial.

Ausführungsbeispiele der Erfindung sind in den Zeichnungen dargestellt und werden nachstehend genauer beschrieben. Es zeigen:
- Figur 1: einen Querschnitt durch ein Buchsenteil mit einem Steckerteil kurz vor dem Einsteckvorgang,
- Figur 2: das Buchsenteil gemäss Figur 1 mit eingestecktem Steckerteil,
- Figur 3: eine perspektivische Darstellung eines Buchsenteils mit geöffneter Seitenwand und mit einer Detaildarstellung,
- Figur 4: das Buchsenteil gemäss Figur 3 aus einer alternativen Perspektive mit geöffneter Seitenwand und mit einer Detaildarstellung,
- Figur 5: einen Querschnitt durch die Hälfte eines Zentrierteils,
- Figur 6: eine Ansicht aus Pfeilrichtung A auf das Zentrierteil gemäss Figur 5,
- Figur 7: zwei identische Zentrierteilhälften gemäss Figur 5 aus unterschiedlichen Perspektiven,
- Figur 8: eine perspektivische Darstellung eines Buchsenteils und eines Zentrierteils vor der Montage,
- Figur 9: das Buchsenteil gemäss Figur 8 mit geöffneter Seitenwand und mit Details der Einrastposition,
- Figur 10: das Buchsenteil gemäss Figur 9 mit alternativen Details der Einrastposition,
- Figur 11: eine Seitenansicht eines einstückig ausgebildeten Zentrierteils,
- Figur 12: eine Ansicht aus Pfeilrichtung A auf das Zentrierteil gemäss Figur 11,
- Figur 13: eine Draufsicht auf das Zentrierteil gemäss Figur 11,
- Figur 14: eine vergrösserte Darstellung der Stirnseite der Zentrierhülse am Zentrierteil gemäss Figur 12,
- Figur 15: eine perspektivische Darstellung des Zentrierteils gemäss Figur 11, und
- Figur 16: eine perspektivische Darstellung eines Buchsenteils vor der Montage eines einstückigen Zentrierteils.

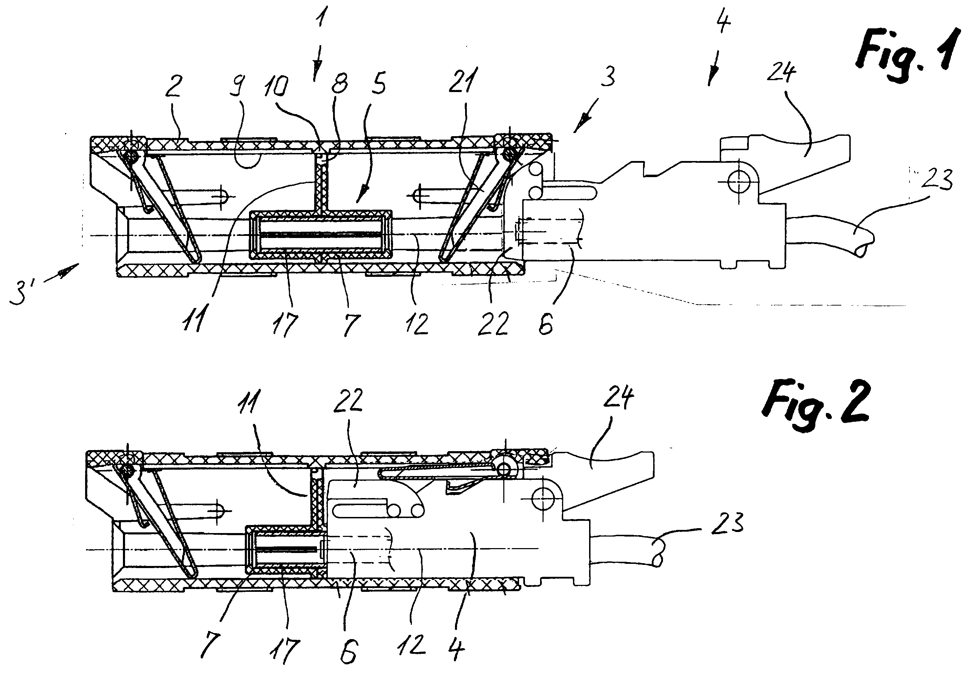

Wie in Figur 1 dargestellt, besteht ein Buchsenteil 1 im wesentlichen aus einem Buchsengehäuse 2, das im vorliegenden Fall auf jeder Seite mit einer Buchsenöffnung 3, 3' versehen ist. Im Buchsengehäuse ist ein Zentrierteil 5 gelagert, das im Ausführungsbeispiel aus zwei Hälften besteht. Das Zentrierteil verfügt über eine Zentrierhülse 7, in welcher eine Innenhülse 17 beispielsweise aus keramischem Material schwimmend gelagert ist. Das Zentrierteil 5 ist an einer Haltewand 11 im Buchsengehäuse eingerastet. Zu diesem Zweck sind Rastmittel 8 vorgesehen, welche mit korrespondierenden Rastmitteln 10 auf der Innenseite 9 des Buchsengehäuses zusammenwirken.

Die beiden Buchsenöffnungen 3, 3' sind mit je einer schwenkbaren Schutzklappe 21 verschlossen. Beim Einstecken eines Steckerteils 4 geben die Schutzklappen die Buchsenöffnungen frei. Das Steckerteil verfügt seinerseits an der Stirnseite über einen Schutzdeckel 22, der den eigentlichen Steckerstift 6 vor mechanischen Einwirkungen und Verschmutzungen schützt. Auch der Schutzdeckel 22 öffnet sich beim Einsteckvorgang automatisch.

Figur 2 zeigt das Steckerteil 4 im eingesteckten Zustand, wobei es im Steckergehäuse einrastet. Durch Zug am optischen Kabel 23 kann das Steckerteil nicht mehr herausgezogen werden. Zum Ausstecken muss ein Entriegelungshebel 24 betätigt werden. Der Steckerstift 6 ist in die Innenhülse 7 eingesteckt und damit auf einen gegenüberliegenden Steckerstift zentriert, der von der anderen Buchsenöffnung her eingeschoben wird. Die Längsmittelachse 12 der Zentrierhülse fällt dabei zusammen mit der optischen Achse des Steckerstifts.

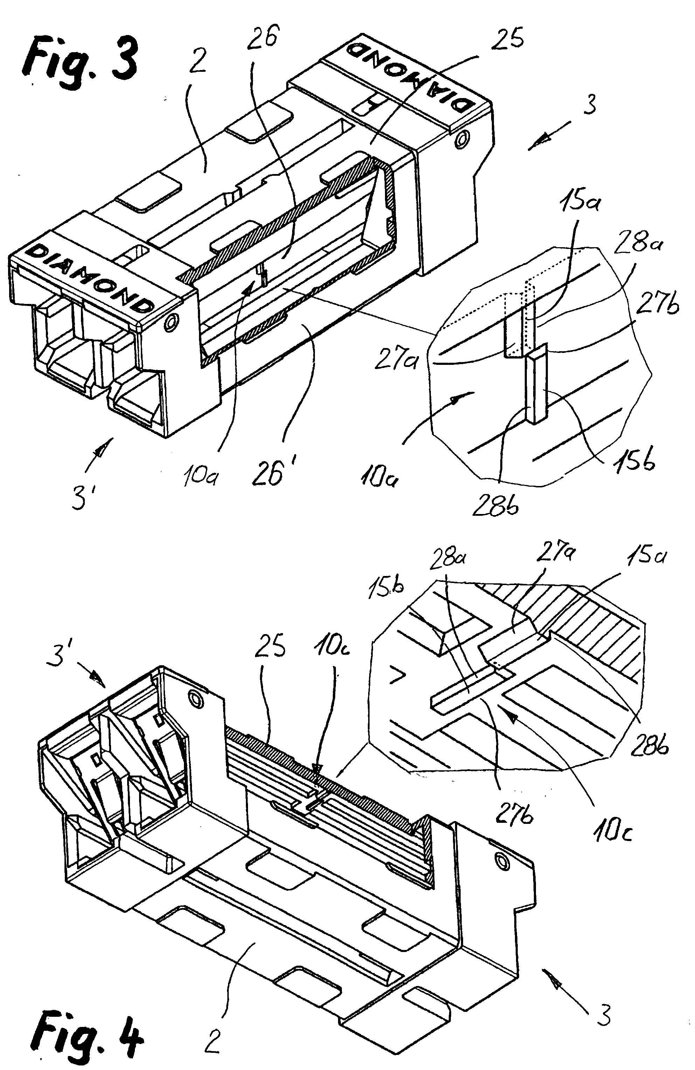

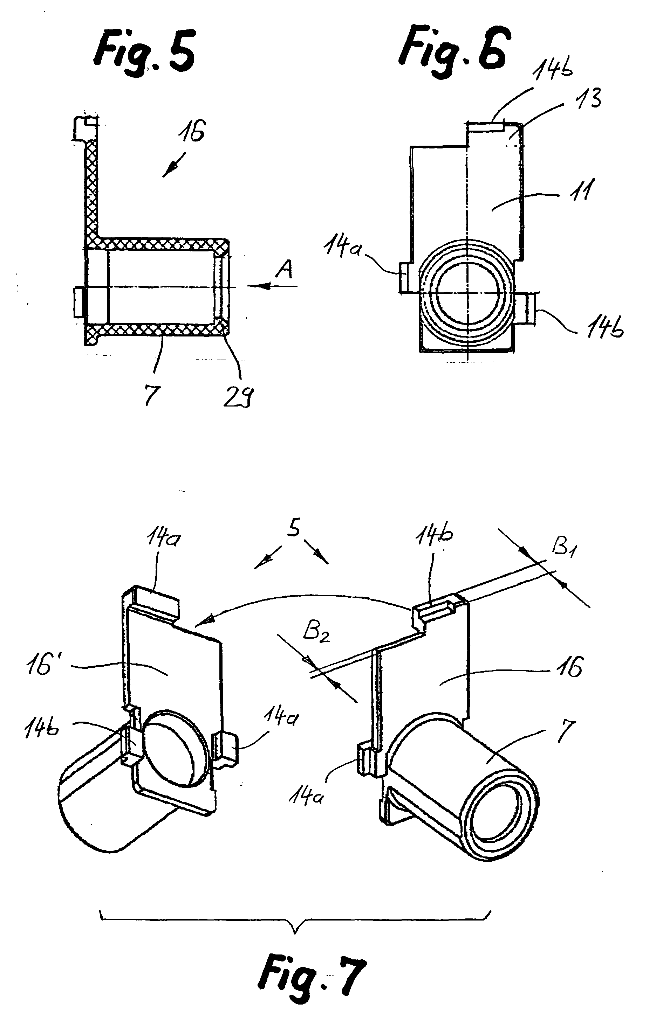

Aus den Figuren 3 und 4 sind Einzelheiten der Rastelemente ersichtlich, welche am Buchsengehäuse angeordnet sind. Aus diesen Darstellungen ist auch ersichtlich, dass es sich um ein Duplex-Buchsenteil handelt, das auf jeder Seite zwei nebeneinanderliegende Steckerteile aufnehmen kann. Das Buchsengehäuse 2 verfügt über eine Deckenwand 25 und bezogen auf jeweils eine Einzelbuchse über Seitenwände 26 und 26'.

Auf der Innenseite des Buchsengehäuses sind insgesamt drei Rastmittelgruppen angeordnet, nämlich je eine an den beiden Seitenwänden und an der Deckenwand. Die Rastmittelgruppe 10a an der Seitenwand 26 besteht aus einem Paar Sperrschultern 15a und 15b. Jede Sperrschulter verfügt über eine schräge Rampe 27a, 27b und über eine Anschlagfläche 28a, 28b. Die beiden Sperrschultern 15a, 15b sind derart versetzt zueinander angeordnet, dass die beiden Anschlagflächen 28a, 28b einander zugewandt sind und auf der gleichen Ebene liegen und dass die beiden schrägen Rampen 27a und 27b voneinander abgewandt sind. Auf genau die gleiche Weise ist auch die hier nicht sichtbare Rastmittelgruppe an der Seitenwand 26' ausgebildet.

Die Rastmittelgruppe 10c an der Deckenwand 25 ist ebenfalls gleich ausgebildet, wie diejenige an den Seitenwänden. Das Detail zu Figur 4 zeigt die Lage der beiden Sperrschultern 15a und 15b.

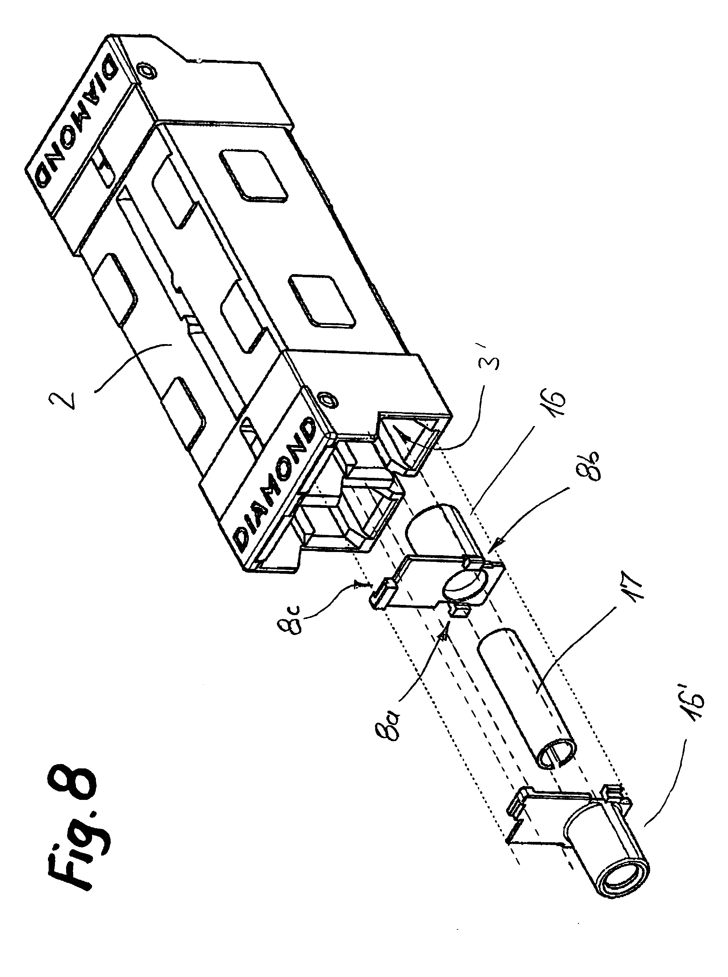

Die Figuren 5 bis 7 zeigen Details eines aus zwei Hälften 16, 16' bestehenden Zentrierteils 5. Die Zentrierhülse 7 ist dabei einstückig mit der Haltewand 11 ausgebildet, welche an jeder Hälfte nur die halbe Wandstärke B2 aufweist. Zum Einschliessen der bereits erwähnten Innenhülse ist das freie Ende der Zentrierhülse 7 mit einem nach innen gerichteten Kragen 29 versehen. Die Haltewand 11 umgibt die Zentrierhülse fast vollständig und sie hat eine etwa rechteckige Aussenform. Im Randbereich 13 sind ebenfalls separate Rastmittelgruppen 8a, 8b, 8c angeordnet (Figur 8).

Jede Rastmittelgruppe besteht nach dem Zusammenfügen von zwei Hälften 16, 16' aus je einer Sperrleiste 14a bzw. 14b. Diese Sperrleisten sind so ausgebildet, dass sie nach dem Zusammenfügen ebenfalls versetzt zueinander angeordnet sind. Aus den Figuren ist auch ersichtlich, dass die einzelnen Sperrleisten jeweils nur um eine halbe Wandstärke der Haltewand 11 versetzt sind, so dass die Rastmittel insgesamt nicht breiter sind als die Gesamtbreite B1 eines zusammengefügten Zentrierteils.

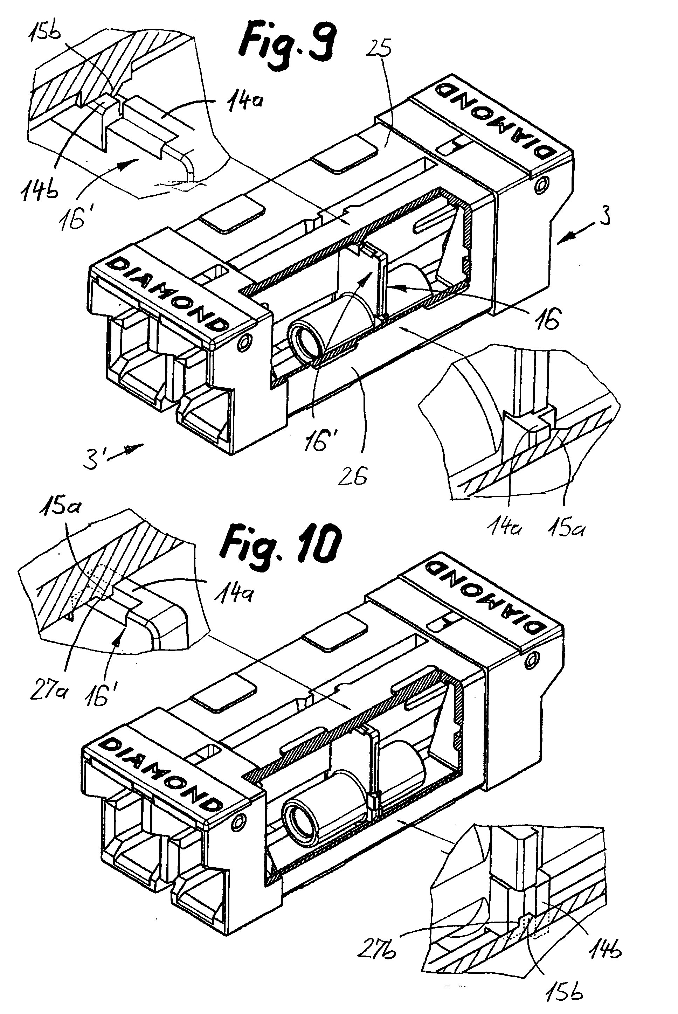

In Figur 8 sind die beiden Hälften 16, 16' vor dem Zusammenfügen dargestellt. Sie nehmen die Innenhülse 17 auf, bevor die ganze Einheit in Richtung der optischen Achse von der Buchsenöffnung 3' her in das Buchsengehäuse 2 eingeschoben und eingerastet wird. Die eingerastete Position ist aus den Figuren 9 und 10 ersichtlich.

An der Deckenwand 25 und an der Seitenwand 26' liegen die einen Sperrleisten 14a bzw. 14b an den Anschlagflächen der ihnen zugeordneten Sperrschultern 15a bzw. 15b an, während die danebenliegenden Sperrleisten der gleichen Rastmittelgruppe an den Anschlagflächen der ihnen zugeordneten Sperrschultern anliegen. Die der Buchsenöffnung 3' (Einführseite) zugewandten schrägen Rampen 27a, 27b wurden dabei von den entsprechenden Sperrleisten 14a, 14b überfahren, wobei eine Dehnung nach aussen stattfindet. Das einmal eingerastete Zentrierteil 5 ist an drei Bereichen stabil gehalten und kann sich im Buchsengehäuse nicht mehr verschieben oder verdrehen. Auch die beiden Hälften 16, 16' werden durch die Verrastung zusammengehalten.

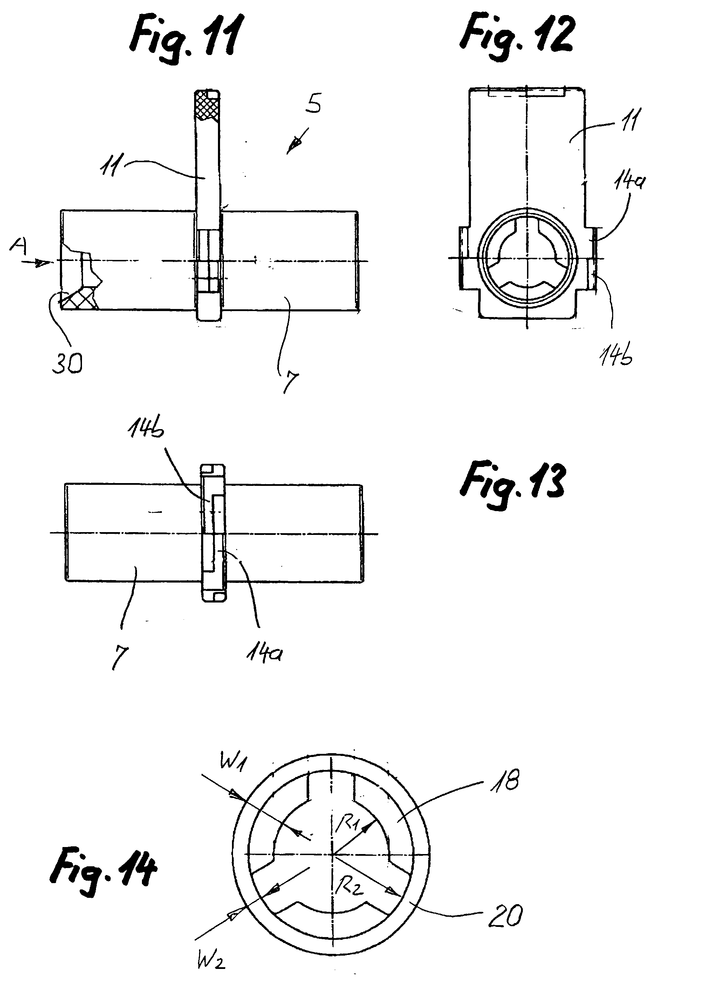

Ein einstückig ausgebildetes Zentrierteil gemäss den Figuren 11 bis 15 ist grundsätzlich mit den gleichen Rastmitteln versehen wie das beschriebene zweiteilige Zentrierteil. Auch die Rastmittel am Buchsengehäuse sind identisch ausgebildet, so dass im gleichen Buchsenteil einteilige und zweiteilige Zentrierteile eingerastet werden können. Auf die Rastmittel und deren Funktion wird daher im Zusammenhang mit dem einteiligen Zentrierteil nicht mehr näher eingegangen und lediglich auf die zweiteilige Version verwiesen.

Die Besonderheit des einteiligen Zentrierteils besteht jedoch darin, dass die Zentrierhülse 7 eine andere Konfiguration aufweist. Um eine ausreichende Biegesteifigkeit zu erhalten, ist die Zentrierhülse 7 im Querschnitt mit wenigstens drei Zentriersektoren 18 versehen, wobei jeder Zentriersektor einen sich über fast die ganze Länge der Zentrierhülse 7 erstreckenden Führungsabschnitt 19 bildet. Zwischen den relativ formsteifen Führungsabschnitten 19 sind relativ elastische Zonen 20 mit geringerer Wandstärke angeordnet. Der Radius R1 im Bereich der Zentriersektoren 18 ist dabei kleiner als der Radius R2 im Bereich der elastischen Zonen, so dass diese einen eingesteckten Steckerstift nicht berühren.

Im Aussenbereich sind die Führungsabschnitte 19 mit einer Anschrägung 30 versehen, um das Einstecken eines Steckerstifts zu erleichtern.

Die Wandstärke W2 im Bereich der elastischen Zonen 20 ist vorzugsweise kleiner als die Hälfte der Wandstärke W1 im Bereich der Zentriersektoren 18. Beim Ausführungsbeispiel beträgt die Wandstärke W1 beispielsweise 0,9 mm und die Wandstärke W2 0,35 mm.

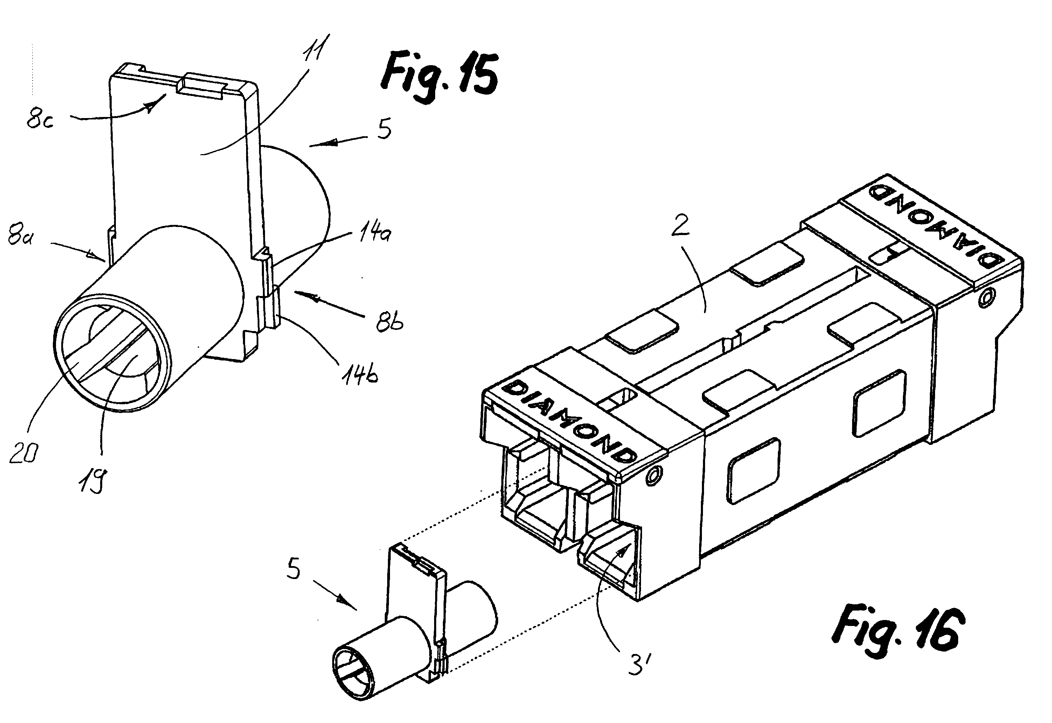

Wie aus Figur 16 ersichtlich ist, kann auch das einstückige Zentrierteil 5 beliebig über eine Buchsenöffnung 3' in axialer Richtung eingeführt und eingerastet werden. Bei einer Optimierung der Dimensionen und bei richtiger Materialwahl hat das einstückig ausgebildete Zentrierteil praktisch die gleichen Eigenschaften wie das zweiteilige Zentrierteil mit Innenhülse.

## Patentansprüche

1. Buchsenteil (1) für eine optische Steckverbindung, mit einem Buchsengehäuse (2), das wenigstens eine Buchsenöffnung (3) zum Einführen eines Steckerteils (4) aufweist und mit wenigstens einem im Buchsengehäuse angeordneten Zentrierteil (5) zur Aufnahme eines dem Stekkerteil zugeordneten Steckerstifts (6), dadurch gekennzeichnet, dass das Zentrierteil (5) als Zentrierhülse (7) mit auf der Aussenseite angeordneten Rastmitteln (8a, 8b, 8c) ausgebildet ist, dass das Zentrierteil von der Buchsenöffnung (3) her in das Buchsengehäuse (2) einschiebbar ist, und dass auf der Innenseite (9) des Buchsengehäuses korrespondierende Rastmittel (10a, 10b, 10c) zur Aufnahme des Zentrierteils (5) angeordnet sind.

2. Buchsenteil nach Anspruch 1, dadurch gekennzeichnet, dass die Zentrierhülse (7) wenigstens teilweise von einer Haltewand (11) umgeben ist, welche quer zur Längsachse (12) der Zentrierhülse (7) verläuft und an deren Randbereich (13) die Rastmittel (8a, 8b, 8c) angeordnet sind.

3. Buchsenteil nach Anspruch 1 oder 2, dadurch gekennzeichnet, dass auf drei im Abstand zueinander angeordneten und parallel zur Längsachse (12) der Zentrierhülse verlaufenden Achsen bzw. Ebenen separate Rastmittel (8a, 8b, 8c, 10a, 10b, 10c) am Zentrierteil (5) bzw. am Buchsengehäuse (2) angeordnet sind.

4. Buchsenteil nach Anspruch 2 und 3, dadurch gekennzeichnet, dass die Haltewand (11) etwa rechteckig ausgebildet ist und dass die separaten Rastmittel an drei Aussenkanten der Haltewand angeordnet sind.

5. Buchsenteil nach einem der Ansprüche 1 bis 4, dadurch gekennzeichnet, dass die Rastmittel als Sperrleisten (14a, 14b) ausgebildet sind, die hinter korrespondierende Sperrschultern (15a, 15b) am jeweils gegenüberliegenden Bauteil einrastbar sind.

6. Buchsenteil nach Anspruch 2 und 5, dadurch gekennzeichnet, dass die Sperrleisten und/oder die Sperrschultern an der Haltewand (11) eine Wandstärke aufweisen, welche geringer ist als die Wandstärke der ganzen Haltewand.

7. Buchsenteil nach einem der Ansprüche 1 bis 7, dadurch gekennzeichnet, dass es wenigstens zwei Buchsenöffnungen (3a, 3b) aufweist, wobei auf der gleichen optischen Achse (12) von zwei Seiten her je ein Steckerteil einschiebbar ist und dass das Zentrierteil von beiden Buchsenöffnungen her einschiebbar und im Buchsengehäuse einrastbar ist.

8. Buchsenteil nach Anspruch 7, dadurch gekennzeichnet, dass die Rastmittel in Rastmittelpaare unterteilt sind und dass jedes Rastmittelpaar zwei nebeneinanderliegende Rastelemente, insbesondere Sperrleisten (14a, 14b) oder Sperrschultern (15a, 15b) aufweist, die beim Einschieben des Zentrierteils (5) alternativ entweder von der einen oder von der anderen Buchsenöffnung her wirksam sind.

9. Buchsenteil nach einem der Ansprüche 1 bis 8, dadurch gekennzeichnet, dass das Zentrierteil (5) aus zwei identischen Hälften (16, 16') zusammengesetzt ist und dass in der Zentrierhülse (7) eine Innenhülse (17) vorzugsweise aus Metall oder aus Keramik gelagert ist.

10. Buchsenteil, insbesondere nach einem der Ansprüche 1 bis 8, dadurch gekennzeichnet, dass das Zentrierteil (5) einstückig aus einem Kunststoffmaterial und im Querschnitt im wesentlichen kreisringförmig ausgebildet ist, dass die Zentrierhülse (7) im Querschnitt in wenigstens drei relativ formsteife Zentriersektoren unterteilt ist, welche sich über die Länge der Zentrierhülse erstrekkende Führungsabschnitte (19) bilden, und welche einen eingesteckten Steckerstift formschlüssig aufnehmen, und dass zwischen den Zentriersektoren (18) relativ elastische Zonen (20) mit geringerer Wandstärke angeordnet sind, welche den Steckerstift nicht berühren.

11. Buchsenteil nach Anspruch 10, dadurch gekennzeichnet, dass die Führungsabschnitte (19) an den beiden Enden der Zentrierhülse (7) sich gegen aussen konisch erweitern.

12. Buchsenteil nach Anspruch 10 oder 11, dadurch gekennzeichnet, dass die Zentrierhülse in einem mittleren Bereich, an dem zwei eingesteckte Steckerstifte stirnseitig aufeinandertreffen, von einer quer zur Längsachse (12) verlaufenden Haltewand (11) umgeben ist, und dass die Umfangselastizität der Zentrierhülse (7) im Bereich der Haltewand kleiner ist als im Bereich der Endabschnitte.

13. Buchsenteil nach einem der Ansprüche 10 bis 12, dadurch gekennzeichnet, dass die Wandstärke der Zentrierhülse (7) im Bereich der relativ elastischen Zonen (20) kleiner ist als die Hälfte der Wandstärke im Bereich der Führungsabschnitte (19) bzw. der Zentriersektoren (18).

14. Buchsenteil nach einem der Ansprüche 10 bis 13, dadurch gekennzeichnet, dass der Sektorwinkel bzw. die Bogenlänge der Zentriersektoren (18) grösser ist als der Sektorwinkel bzw. die Bogenlänge der dazwischenliegenden relativ elastischen Zonen (20).

15. Buchsenteil nach einem der Ansprüche 1 bis 14, dadurch gekennzeichnet, dass das Zentrierteil (5) aus einem Polyphenylsulfid (PPS), vorzugsweise mit einem Gehalt von ca. 30% Kohlenstoff und ca. 15% Polytetrafluoräthylen (PTFE) besteht.
